# EUROPÄISCHE PATENTSCHRIFT

(11) **EP 4 351 904 B1**
(45) Veröffentlichungstag und Bekanntmachung des Hinweises auf die Patenterteilung: **19.11.2025**
(21) Anmeldenummer: 22732397.9
(22) Anmeldetag: 03.06.2022
(51) Int. Cl.: B60J 10/16, B60J 10/32, B29C 48/00, B29C 48/09, B29C 48/12, B29C 48/13, B29C 48/21

(54) **VERFAHREN ZUR HERSTELLUNG EINES DICHTUNGSPROFILS UND DICHTUNGPROFIL**
METHOD FOR PRODUCING A SEAL PROFILE, AND SEAL PROFILE
PROCÉDÉ DE FABRICATION D'UN PROFILÉ D'ÉTANCHÉITÉ ET PROFILÉ D'ÉTANCHÉITÉ

(30) Priorität: 11.06.2021 DE 102021115217
(43) Veröffentlichungstag der Anmeldung: 17.04.2024
(73) Patentinhaber: CQLT SaarGummi Technologies S.à.r.l., 5544 Remich (LU)
(72) Erfinder: GRÜTER, Achim, 66780 Rehlingen-Siersburg (DE); KOTZ, Stefan, 66663 Merzig (DE)
(74) Vertreter: Patentanwälte Bernhardt / Wolff Partnerschaft mbB
(86) Internationale Anmeldenummer: PCT/EP2022/000052
(87) Internationale Veröffentlichungsnummer: WO 2022/258219

(56) Entgegenhaltungen:
- EP-A1- 0 372 745
- WO-A1-03/008174
- DE-A1- 3 835 211
- US-B2- 6 874 281

## Beschreibung

Die Erfindung betrifft ein Verfahren zur Herstellung eines Dichtungsprofils nach dem Oberbegriff des Anspruchs 1 sowie ein Dichtungsprofil.

Durch Benutzung ist bekannt, Dichtungsprofile aus Kunststoff zur Abdichtung einer Fahrzeugtür gegenüber der Türöffnung in einer Karosserie zu bilden, welche neben einem Dichtungsabschnitt auch einen Klemmabschnitt mit einer Metallverstärkung aus Stahl oder Aluminium aufweisen. Die Metallverstärkung ist in den Kunststoff eingebettet und hierdurch vor äußeren Einflüssen geschützt. Wird das beispielsweise extrudierte Dichtungsprofil jedoch gekürzt/abgelängt, kann es an den Schnittflächen zu Korrosion kommen und es sind zusätzliche Korrosionsschutzmaßnahmen notwendig. Auch wird das Recycling von derartigen Dichtungsprofilen durch die dann abzutrennende Metallverstärkung erschwert.

Aus US 6 874 281 B2 ist ein Dichtungsprofil für ein Kraftfahrzeug bekannt, bei welchem ein U-förmiger Klemmabschnitt nicht aus einem Metalleinleger, sondern aus einem extrudiertem Kunststoffprofil gebildet ist.

Aufgabe der Erfindung ist es, ein Verfahren zur Herstellung eines Dichtungsprofils bereitzustellen, welches kostengünstig ist und ein besonders einfaches Herstellen sowie Recyceln ermöglicht.

Diese Aufgabe wird dadurch gelöst, dass der Klemmabschnitt durch mindestens ein extrudiertes Klemmprofil aus einem Kautschuk gebildet wird, der Kautschuk des Klemmprofils durch Vulkanisation zumindest teilweise vernetzt wird, der Klemmabschnitt einem Extrusionprozess zugeführt wird, bei welchem der mindestens eine Dichtungsabschnitt aus einem Kautschuk an den Klemmabschnitt anextrudiert wird und anschließend der Dichtungsabschnitt durch Vulkanisation vernetzt wird, wobei dem Extrusionsprozess des mindestens einen Dichtungsabschnitts mehrere separate Klemmprofile zugeführt werden. Als Ergebnis wird ein Dichtungsprofil aus Kunststoff erreicht, welches besonders einfach herstellbar ist und aufgrund des Anextrudierens des Dichtungsabschnitts an den zumindest teilweise vernetzten Klemmabschnitt eine besonders stabile Verbindung zwischen dem Klemmabschnitt und dem Dichtungsabschnitt aufweist.

Das Klemmprofil besteht nach seiner Extrusion vorzugsweise ausschließlich aus Kunststoff bzw. einem Kautschuk. Auf weitere Verstärkungsmittel kann verzichtet werden, insbesondere ist kein metallisches Verstärkungsmittel wie eine Metalleinlage vorgesehen, wodurch sich das spätere Recyclen vereinfacht.

Vorzugsweise kann es sich bei dem Kautschuk des Klemmabschnitts und/oder des Dichtungsabschnitts um einen Synthesekautschuk, insbesondere EPDM (Ethylen-Propylen-Dien-Kautschuk) handeln.

Eine besonders gute Befestigung des Dichtungsprofils an einer Kraftfahrzeugkarosserie sowie eine gute Abdichtung kann dadurch erreicht werden, dass der Klemmabschnitt ein Hartplastik, insbesondere mit einer Härte von mindestens 40 Shore-D, und/oder der Dichtungsabschnitt einen Weichgummi, insbesondere Moosgummi mit einer Härte von höchstens 70 Shore-A, umfasst. Besonders bevorzugt weist das Hartplastik des Klemmabschnitts eine Härte von 50 Shore-D und/oder der Dichtungsabschnitt eine Härte von 60 Shore-A auf.

An dem Klemmabschnitt kann mindestens eine Anlagelippe aus einem weicheren Material, insbesondere mit einer Härte von maximal 70 Shore-A, vorgesehen sein. Besonders bevorzugt ist die Härte der mindestens einen Anlagelippe 60 Shore-A.

Vor dem Anextrudieren des Dichtungsabschnitts an den Klemmabschnitt können in das vorzugsweise ausschließlich aus Kunststoff bzw. Kautschuk bestehende Klemmprofil des Klemmabschnitts in Längsrichtung versetzte Trennstellen, insbesondere Schlitze, eingebracht werden. Die Trennstellen können in Längsrichtung des Klemmabschnitts einen festen und/oder unterschiedlichen Abstand aufweisen.

Zudem können in Längsrichtung benachbarte Trennstellen im Querschnitt des Klemmabschnitts an unterschiedlichen Stellen angeordnet sein, insbesondere auf gegenüberliegenden Seiten des Klemmprofils. Hierdurch wird eine besonders gute Flexibilität des Klemmabschnitts quer zur Längsrichtung erreicht.

Erfindungsgemäß werden in dem Extrusionsprozess des mindestens einen Dichtungsabschnitts mehrere separate Klemmprofile ausschließlich aus Kunststoff bzw. Kautschuk zugeführt. Die Klemmprofile können dabei in festem Abstand zueinander und/oder mit unterschiedlichem Abstand zueinander dem Extrusionsprozess zugeführt werden. Hierdurch kann die Flexibilität des Dichtungsprofils quer zur Längsrichtung und auch die Haltekraft des Dichtungsprofils an einem Karosserieelement optimal eingestellt werden.

In einer besonders bevorzugten Ausführungsform werden die vorgenannten Verfahrensschritte in einer einzigen Herstellungslinie durchgeführt. Hierdurch werden Lagerhaltungskosten reduziert und es kann beispielsweise die Restwärme aus der Vulkanisation des Klemmabschnitts vorteilhaft bei der Vulkanisation des Dichtungsabschnitts genutzt werden.

Um besonders einfach eine Vielzahl von Dichtungsprofilen für unterschiedliche Fahrzeugtypen bereitstellen zu können, kann vorgesehen sein, den Klemmabschnitt mit einem einheitlichen Querschnitt herzustellen und je nach Bedarf an den Klemmabschnitt Dichtungsabschnitte mit unterschiedlichem Querschnitt anzuextrudieren.

Bei der Vulkanisation des Kautschuks des Klemmabschnitts und/oder des Kautschuks des Dichtungsabschnitts wird der entsprechende Kautschuk vorzugsweise auf mindestens 100 °C erwärmt.

Des Weiteren wird auch ein Dichtungsprofil, insbesondere zur Abdichtung einer Fahrzeugtür gegenüber einer Türöffnung einer Karosserie, mit einem Klemmabschnitt und mindestens einem Dichtungsabschnitt beansprucht. Der Klemmabschnitt und der mindestens eine Dichtungsabschnitt umfassen dabei einen oder mehrere vulkanisierte Kautschuke.

Weitere Besonderheiten und Vorzüge der Erfindung ergeben sich aus der folgenden Beschreibung bevorzugter Ausführungsbeispiele anhand der Zeichnungen. Es zeigen:
- Fig. 1: eine perspektivische Darstellung einer ersten Ausführungsform eines Dichtungsprofils mit einem Klemmabschnitt und einem Dichtungsabschnitt in einem abgesetzten Schnitt;
- Fig. 2: eine perspektivische Darstellung eines Klemmprofils des Klemmabschnitts von Figur 1;
- Fig. 3: eine perspektivische Darstellung einer zweiten Ausführungsform eines Klemmabschnitts und
- Fig. 4: eine perspektivische Darstellung des Dichtungsabschnitts von Figur 1.

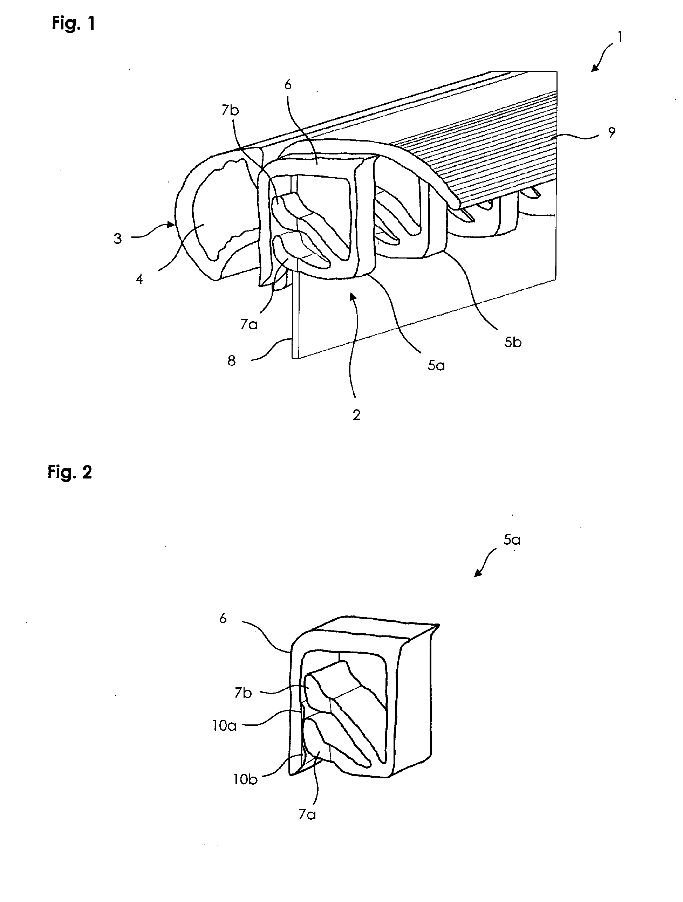

In Figur 1 ist eine perspektivische Darstellung einer ersten Ausführungsform eines Dichtungsprofils 1 in einem abgesetzten Schnitt gezeigt. Das Dichtungsprofil 1 umfasst einen Klemmabschnitt 2 und einen Dichtungsabschnitt 3. Der Dichtungsabschnitt 3 wird durch ein extrudiertes Schlauchprofil mit einer Hohlkammer 4 gebildet. Vorzugsweise kann der Dichtungsabschnitt 3 zumindest abschnittsweise aus Moosgummi, insbesondere mit einer Härte von 60 Shore-A, ausgebildet sein.

Der Klemmabschnitt 2 wird durch mehrere voneinander beabstandete Klemmprofile gebildet, von welchen hier die Klemmprofile 5a, 5b beziffert sind. Die Klemmprofile 5a, 5b wurden dadurch hergestellt, dass von einem entsprechenden extrudierten Profil ausschließlich aus Kunststoff bzw. Kautschuk einzelne Elemente abgetrennt werden. Wie der Figur 1 zu nehmen ist, weist jedes Klemmprofil 5a, 5b im Querschnitt einen U-förmigen Haltebogen 6 auf. Von einem freien Ende eines der Schenkel des U-förmigen Haltebogens 6 erstrecken sich Anlagelippen 7a, 7b in einen von dem Haltebogen 6 eingeschlossenen Hohlraum. Die Anlagelippen 7a, 7b sind aus einem weicheren Material gebildet, vorzugsweise aus Moosgummi insbesondere mit einer Härte von 60 Shore-A.

Durch die Anlagelippen 7a, 7b kann das Dichtungsprofil 1 an einem hier schematisch dargestellten Falz 8 einer Fahrzeugkarosserie gehalten werden. Beim Aufstecken des U-förmigen Haltebogens 6 des Klemmabschnitts 2 werden die Anlagelippen 7a, 7b elastisch verformt und hierdurch der Falz 8 zwischen den Anlagelippen 7a, 7b und dem gegenüberliegenden Schenkel des U-förmigen Haltebogens 6 eingeklemmt.

Der Dichtungsabschnitt 3 umfasst zusätzlich einen Abdeckabschnitt 9, welcher sich im Querschnitt über dem Klemmabschnitt 2 bzw. den Klemmprofilen 5a, 5b und auch zumindest abschnittsweise entlang des gegenüberliegenden Schenkels des Haltebogens 6 erstreckt und diesen somit vor äußeren Einflüssen schützt sowie optisch verdeckt.

In Figur 2 ist eine perspektivische Darstellung des Klemmprofils 5a von Figur 1 gezeigt. Wie dort zu entnehmen ist, kann der den Anlagelippen 7a, 7b gegenüberliegende Schenkel des U-förmigen Haltebogens 6 an der Innenseite zwei Haltenasen 10a, 10b aufweisen, welche vorzugsweise ebenfalls aus Moosgummi, insbesondere mit einer Härte von 60 Shore-A, ausgebildet sind. Durch die Haltenasen 10a, 10b kann zusammen mit den Anlagelippen 7a, 7b eine besonders sichere Befestigung des Klemmprofils 5a an dem in Figur 1 gezeigten Falz 8 erreicht werden. Die Haltenasen 10a, 10b sind dabei vorzugsweise auf Höhe der Anlagelippen 7a, 7b oder darunter angeordnet.

Das Klemmprofil 5a wird wie auch die weiteren in Figur 1 gezeigten Klemmprofile durch Abtrennen von einem extrudierten Profil insbesondere aus EPDM gebildet. Die Schenkel des U-förmigen Klemmprofils bestehen dabei wie auch bei den weiteren Ausführungsbeispielen ausschließlich aus einem Kunststoff bzw. Kautschuk. Dadurch, dass die Klemmprofile des in Figur 1 gezeigten Dichtungsprofils 1 in dessen Längsrichtung voneinander beabstandet sind, wird eine besonders hohe Flexibilität des Dichtungsprofils 1 quer zur Längsrichtung erreicht. Der Abstand der Klemmprofile kann dabei einen festen Wert oder in Längsrichtung des Dichtungsprofils 1 unterschiedlich ausgebildet sein. So kann beispielsweise in einem Längenabschnitt des Dichtungsprofils 1, welcher später in einem Bereich einer Karosserie mit kleinerem Radius angeordnet wird, ein größerer Abstand zwischen den Klemmprofilen vorgesehen werden, um eine möglichst große Flexibilität zu erreichen. Ebenso kann vorgesehen sein, dass in einem Bereich, in welchem eine besonders hohe Haltekraft des Dichtungsprofils 1 an dem Falz 8 bzw. der Fahrzeugkarosserie benötigt wird, der Abstand zwischen den Klemmprofilen verringert ist, sodass durch eine größere Anzahl an Klemmprofilen je Längeneinheit eine höhere Haltekraft erreicht wird.

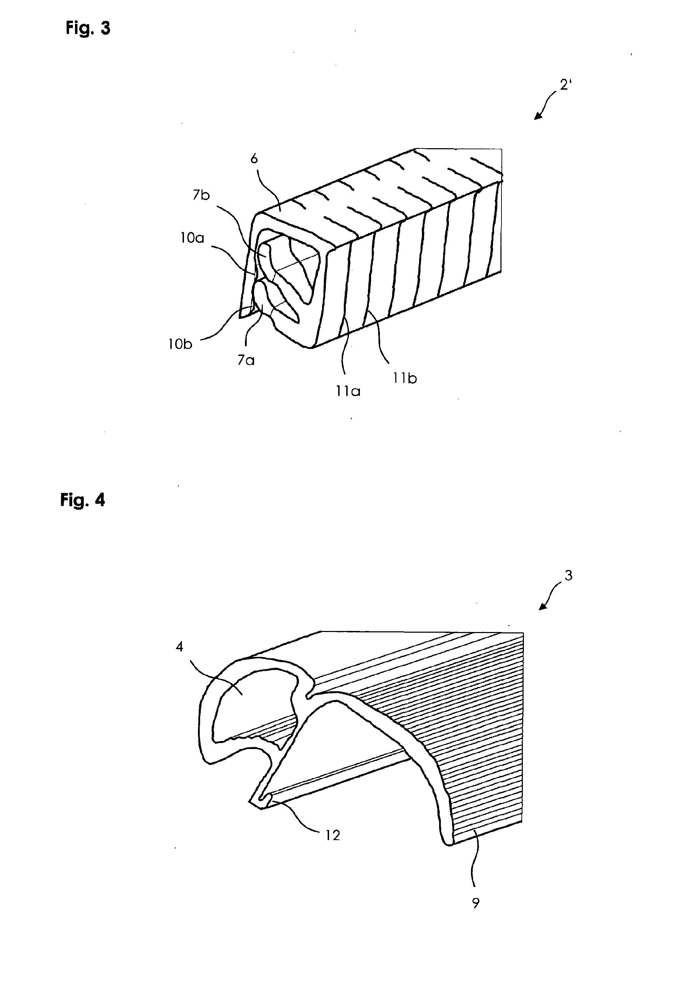

In Figur 3 ist eine perspektivische Darstellung einer zweiten Ausführungsform eines Klemmabschnitts 2' gezeigt. Im Unterschied zu der zuvor beschriebenen Ausführungsform wurden hierbei keine separaten Klemmprofile von einem extrudierten Profil abgetrennt, sondern das ausschließlich aus einem Kunststoff bzw. Kautschuk gebildete extrudierte Profil bildet das Klemmprofil des Klemmabschnitts 2'. In dem Klemmabschnitt 2' sind jedoch in Längsrichtung versetzte Trennstellen in Form von Schlitzen, von welchen hier die Schlitze 11a, 11b beziffert sind, eingebracht. Die Schlitze 11a, 11b verlaufen vorzugsweise in einer Ebene rechtwinklig zur Längsrichtung des extrudierten Klemmprofils des Klemmabschnitts 2', wobei in jeder Ebene vorzugsweise zwei Schlitze vorgesehen sind, welche die Schenkel des U-förmigen Haltebogens 6 und die Anlagelippen 7a, 7b vollständig durchtrennen. In der gezeigten Ausführungsform ist vorgesehen, dass lediglich im Bereich der die Schenkel verbindenden Basis des U-förmigen Haltebogens 6 eine Verbindung zu dem benachbarten Bereich des Klemmabschnitt 2' vorliegt. Dies ermöglicht trotz der einstückigen Bauweise eine besonders hohe Flexibilität des Klemmabschnitts 2' quer zu dessen Längsrichtung. In nicht gezeigten alternativen Ausführungsformen können die Schlitze nicht symmetrisch und/oder auch in den gegenüberliegenden Schenkeln des U-förmigen Haltebogens 6 in Längsrichtung versetzt zueinander angeordnet sein. Die im Übrigen zu der Ausführungsform von Figur 2 identischen Merkmale sind mit den gleichen Bezugszeichen versehen.

In Figur 4 ist eine perspektivische Darstellung des Dichtungsabschnitts 3 von Figur 1 gezeigt. Der Dichtungsabschnitt 3 wird durch Extrusion eines Kautschuks erzeugt, wobei dem Extrusionprozess Klemmprofile entsprechend dem in Figur 2 gezeigten separaten Klemmprofil 5a und/oder ein einstückiges Klemmprofil entsprechend dem Klemmabschnitt 2' gemäß der Ausgestaltung in Figur 3 zugeführt werden kann. Der Dichtungsabschnitt 3 wird damit an die Klemmprofile bzw. den Klemmabschnitt anextrudiert, wobei jedes Klemmprofil einen Kautschuk umfasst, welcher durch Vulkanisation bereits zumindest teilweise vernetzt ist. Hierdurch wird eine besonders stabile Verbindung zwischen dem Klemmabschnitt bzw. den Klemmprofilen und dem Dichtungsabschnitt erreicht. In einem nachfolgenden Schritt wird dann auch der Dichtungsabschnitt durch Zuführen von Wärme und Vulkanisation vernetzt. Gegebenenfalls werden hierbei auch der Klemmabschnitt bzw. die Klemmprofile vollständig vernetzt.

In der Herstellung des Dichtungsprofils können folglich mehrere separate Klemmprofile gemäß der Figur 2 und/oder ein durchgehendes Klemmprofil als Klemmabschnitt gemäß der Figur 3 dem Extrusionsprozess des Dichtungsabschnitts 3 zugeführt werden. Bei üblicherweise gleichbleibender Extrusionsgeschwindigkeit kann dabei durch die Zufuhrgeschwindigkeit der separaten Klemmprofile der Abstand zueinander eingestellt werden. Vorzugsweise erfolgt die Herstellung dabei in eine Herstellungslinie, das heißt, dass der Klemmabschnitt durch Extrusion eines Kautschuks, insbesondere EPDM, hergestellt, der Kautschuk durch Vulkanisation zumindest teilweise vernetzt wird, dann je nach Anwendungsfall einzelne Klemmprofile gemäß Figur 2 abgetrennt oder Trennstellen gemäß Figur 3 eingebracht werden und anschließend das hierdurch erzeugte einstückige oder mehrstückige Klemmprofil unmittelbar dem Extrusionprozess des Dichtungsabschnitts zugeführt wird. Die nachfolgende Vulkanisation des Dichtungsabschnitts und gegebenenfalls des Klemmabschnitts erfolgt dabei ebenfalls vorzugsweise in der gleichen Herstellungslinie.

Bei den gezeigten Ausführungsformen ist das Schlauchprofil des Dichtungsabschnitts, welches die Hohlkammer 4 umgibt, seitlich an einem der Schenkel des U-förmigen Haltebogens 6 des Klemmabschnitts 2,2' angeordnet, insbesondere an dem den Anlagelippen 7a, 7b gegenüberliegenden Schenkel. Eine solche Ausgestaltung ist besonders gut für Türdichtungen eines Kraftfahrzeugs geeignet. Um die Verbindung des Dichtungsabschnitts 3 mit dem Klemmabschnitt 2, 2' zusätzlich zu verbessern, kann an dem Dichtungsabschnitt 3 ein Haltevorsprung 12 vorgesehen sein, welcher das Ende eines der Schenkel des U-förmigen Haltebogens 6, insbesondere des den Anlagelippen 7a, 7b gegenüberliegenden Schenkels, haltend umgreift.

Anstelle des in Figur 4 gezeigten Dichtungsabschnitts 3 kann auch ein Dichtungsabschnitt mit einem anderen Querschnitt an den Klemmabschnitt 2, 2' anextrudiert werden. Dies ermöglicht eine besonders einfache Anpassung des Dichtungsprofils 1 an unterschiedliche Fahrzeugtypen. Des Weiteren kann der Klemmabschnitt auch aus unterschiedlichen Materialien, vorzugsweise aus Kunststoff bzw. Kautschuk, gebildet sein, wobei jedoch vorzugsweise kein Metall enthalten ist.

### Bezugszeichenliste:

- 1: Dichtungsprofil
- 2, 2': Klemmabschnitt
- 3: Dichtungsabschnitt
- 4: Hohlkammer
- 5a, 5b: Klemmprofile
- 6: U-förmiger Haltebogen
- 7a, 7b: Anlagelippen
- 8: Falz
- 9: Abdeckabschnitt
- 10a, 10b: Haltenasen
- 11a, 11b: Trennstellen
- 12: Haltevorsprung

## Patentansprüche

1. Verfahren zur Herstellung eines Dichtungsprofils (1), insbesondere eines Dichtungsprofils (1) zur Abdichtung einer Fahrzeugtür gegenüber einer Türöffnung einer Karosserie, wobei das Dichtungsprofil (1) einen Klemmabschnitt (2) und mindestens einen Dichtungsabschnitt (3) umfasst und der Klemmabschnitt (2, 2') durch mindestens ein extrudiertes Klemmprofil (5a; 5b) aus einem Kautschuk gebildet wird,
**dadurch gekennzeichnet, dass**
der Kautschuk des Klemmprofils (5a; 5b) durch Vulkanisation zumindest teilweise vernetzt wird, der Klemmabschnitt (2; 2') im nachfolgenden Schritt einem Extrusionsprozess zugeführt wird, bei welchem der mindestens eine Dichtungsabschnitt (3) aus einem Kautschuk an den Klemmabschnitt (2; 2') anextrudiert wird und anschließend der Dichtungsabschnitt (3) durch Vulkanisation vernetzt wird, wobei dem Extrusionsprozess des mindestens einen Dichtungsabschnitts (3) mehrere separate Klemmprofile (5a; 5b) zugeführt werden.

2. Verfahren nach Anspruch 1,
**dadurch gekennzeichnet,**
**dass** es sich bei dem Kautschuk des Klemmabschnitts (2; 2') und/oder des Dichtungsabschnitts (3) um einen Synthesekautschuk, insbesondere EPDM, handelt.

3. Verfahren nach Anspruch 1 oder 2,
**dadurch gekennzeichnet,**
**dass** der Klemmabschnitt (2; 2') ein Hartplastik, insbesondere mit einer Härte von mindestens 40 Shore-D, und/oder der Dichtungsabschnitt (3) einen Weichgummi, insbesondere Moosgummi mit einer Härte von höchstens 70 Shore-A, umfasst.

4. Verfahren nach einem der Ansprüche 1 bis 3,
**dadurch gekennzeichnet,**
**dass** an dem Klemmprofil (2'; 5a; 5b) mindestens eine Anlagelippe (7a; 7b) aus einem weicheren Material, insbesondere mit einer Härte von maximal 70 Shore-A, vorgesehen ist.

5. Verfahren nach einem der Ansprüche 1 bis 4,
**dadurch gekennzeichnet,**
**dass** in den Klemmabschnitt (2') vor dem Anextrudieren des Dichtungsabschnitts (3) in Längsrichtung versetzte Trennstellen (11a; 11b), insbesondere Schlitze, eingebracht werden.

6. Verfahren nach Anspruch 5,
**dadurch gekennzeichnet,**
**dass** die Trennstellen (11a; 11b) in Längsrichtung einen festen und/oder unterschiedlichen Abstand aufweisen.

7. Verfahren nach Anspruch 1,
**dadurch gekennzeichnet,**
**dass** die Klemmprofile (5a; 5b) in festen Abstand zueinander und/oder mit unterschiedlichem Abstand zueinander dem Extrusionsprozess des mindestens einen Dichtungsabschnitts (3) zugeführt werden.

8. Verfahren nach einem der vorhergehenden Ansprüche,
**dadurch gekennzeichnet,**
**dass** die Verfahrensschritte in einer einzigen Herstellungslinie durchgeführt werden.

9. Verfahren nach einem der vorhergehenden Ansprüche,
**dadurch gekennzeichnet,**
**dass** der Klemmabschnitt (2; 2') mit einem einheitlichen Querschnitt hergestellt wird und je nach Bedarf an den Klemmabschnitt (2; 2') Dichtungsabschnitte mit unterschiedlichem Querschnitt anextrudiert werden.

10. Verfahren nach einem der vorhergehenden Ansprüche,
**dadurch gekennzeichnet,**
**dass** der Kautschuk des Klemmabschnitts (2; 2') und/oder der Kautschuk des Dichtungsabschnitts (3) bei der Vulkanisation auf mindestens 100 °C erwärmt wird.

11. Dichtungsprofil (1), insbesondere zur Abdichtung einer Fahrzeugtür gegenüber einer Türöffnung einer Karosserie, mit einem Klemmabschnitt (2; 2') und mindestens einem Dichtungsabschnitt (3), wobei der Klemmabschnitt (2; 2') und der mindestens eine Dichtungsabschnitt (3) jeweils einen oder mehrere vulkanisierte Kautschuke umfasst, **dadurch gekennzeichnet, dass**, der Klemmabschnitt (2) mehrere separate Klemmprofile (5a; 5b) umfasst.

## Claims

1. Method for producing a sealing profile (1), in particular a sealing profile (1) for sealing off a vehicle door with respect to a door opening of a vehicle body, wherein the sealing profile (1) comprises a clamping portion (2) and at least one sealing portion (3) and the clamping portion (2, 2') is formed by at least one extruded clamping profile (5a; 5b) composed of a rubber,
**characterized in that**
the rubber of the clamping profile (5a; 5b) is at least partially cross-linked by vulcanization, the clamping portion (2; 2') is fed to an extrusion process in the following step, in which extrusion process the at least one sealing portion (3) is extruded onto the clamping portion (2; 2') from a rubber and subsequently the sealing portion (3) is cross-linked by vulcanization, wherein multiple separate clamping profiles (5a; 5b) are fed to the extrusion process of the at least one sealing portion (3).

2. Method according to Claim 1,
**characterized**
**in that** the rubber of the clamping portion (2; 2') and/or of the sealing portion (3) is a synthetic rubber, in particular EPDM.

3. Method according to Claim 1 or 2,
**characterized**
**in that** the clamping portion (2; 2') comprises a hard plastic, in particular having a Shore D hardness of at least 40, and/or the sealing portion (3) comprises a soft rubber, in particular foam rubber having a Shore A hardness of at most 70.

4. Method according to one of Claims 1 to 3,
**characterized**
**in that** at least one contact lip (7a; 7b) composed of a relatively soft material, in particular having a Shore A hardness of at most 70, is provided on the clamping profile (2'; 5a; 5b).

5. Method according to one of Claims 1 to 4,
**characterized**
**in that** longitudinally offset separation points (11a; 11b), in particular slits, are formed in the clamping portion (2') prior to the sealing portion (3) being extruded on.

6. Method according to Claim 5,
**characterized**
**in that** the separation points (11a; 11b) have a fixed and/or different spacing in the longitudinal direction.

7. Method according to Claim 1,
**characterized**
**in that** the clamping profiles (5a; 5b) are fed to the extrusion process of the at least one sealing portion (3) with a fixed spacing to one another and/or with a different spacing to one another.

8. Method according to one of the preceding claims, **characterized**
**in that** the method steps are carried out in a single production line.

9. Method according to one of the preceding claims, **characterized**
**in that** the clamping portion (2; 2') is produced with a uniform cross section and, according to requirement, sealing portions with different cross section are extruded onto the clamping portion (2; 2').

10. Method according to one of the preceding claims, **characterized**
**in that** the rubber of the clamping portion (2; 2') and/or the rubber of the sealing portion (3) are/is heated to at least 100°C during vulcanization.

11. Sealing profile (1), in particular for sealing off a vehicle door with respect to a door opening of a vehicle body, having a clamping portion (2; 2') and having at least one sealing portion (3),
wherein the clamping portion (2; 2') and the at least one sealing portion (3) in each case comprises one or more vulcanized rubbers, **characterized in that** the clamping portion (2) comprises multiple separate clamping profiles (5a; 5b).

## Revendications

1. Procédé de fabrication d'un profilé d'étanchéité (1), en particulier d'un profilé d'étanchéité (1) destiné à assurer l'étanchéité d'une portière de véhicule par rapport à une baie d'une carrosserie, le profilé d'étanchéité (1) comprenant une portion de serrage (2) et au moins une portion d'étanchéité (3), et la portion de serrage (2, 2') étant formée d'au moins un profilé de serrage extrudé (5a ; 5b) en caoutchouc,
**caractérisé en ce que** le caoutchouc du profilé de serrage (5a ; 5b) est au moins partiellement réticulé par vulcanisation, puis, dans l'étape suivante, la portion de serrage (2 ; 2') est introduite dans un processus d'extrusion au cours duquel ladite au moins une portion d'étanchéité (3) est fixée à la portion de serrage (2 ; 2') par extrusion à partir d'un caoutchouc, puis la portion d'étanchéité (3) est réticulée par vulcanisation, sachant que plusieurs profilés de serrage (5a ; 5b) distincts sont introduits dans le processus d'extrusion de ladite au moins une portion d'étanchéité (3).

2. Procédé selon la revendication 1,
**caractérisé en ce que** le caoutchouc de la portion de serrage (2 ; 2') et/ou de la portion d'étanchéité (3) est un caoutchouc synthétique, en particulier de l'EPDM.

3. Procédé selon la revendication 1 ou 2,
**caractérisé en ce que** la portion de serrage (2 ; 2') comprend un plastique dur, en particulier d'une dureté d'au moins 40 Shore D, et/ou la portion d'étanchéité (3) comprend un caoutchouc souple, en particulier un caoutchouc mousse d'une dureté maximale de 70 Shore A.

4. Procédé selon l'une des revendications 1 à 3,
**caractérisé en ce qu'**au moins une lèvre d'appui (7a ; 7b) en un matériau plus souple, en particulier d'une dureté maximale de 70 Shore A, est prévue sur le profilé de serrage (2' ; 5a ; 5b).

5. Procédé selon l'une des revendications 1 à 4,
**caractérisé en ce que** des points de séparation (11a ; 11b), en particulier des fentes, décalés longitudinalement sont introduits dans la portion de serrage (2') avant la fixation par extrusion de la portion d'étanchéité (3).

6. Procédé selon la revendication 5,
**caractérisé en ce que** les points de séparation (11a ; 11b) présentent un espacement fixe et/ou différent dans le sens longitudinal.

7. Procédé selon la revendication 1,
**caractérisé en ce que** les profilés de serrage (5a ; 5b) sont introduits dans le processus d'extrusion de ladite au moins une portion d'étanchéité (3) en présentant un espacement fixe les uns par rapport aux autres et/ou un espacement différent les uns par rapport aux autres.

8. Procédé selon l'une des revendications précédentes,
**caractérisé en ce que** les étapes du procédé sont réalisées sur une seule ligne de fabrication.

9. Procédé selon l'une des revendications précédentes,
**caractérisé en ce que** la portion de serrage (2 ; 2') est fabriquée avec une section transversale uniforme et, selon les besoins, des portions d'étanchéité de sections transversales différentes sont fixées par extrusion à la portion de serrage (2 ; 2').

10. Procédé selon l'une des revendications précédentes,
**caractérisé en ce que** le caoutchouc de la portion de serrage (2 ; 2') et/ou le caoutchouc de la portion d'étanchéité (3) sont chauffés à au moins 100 °C lors de la vulcanisation.

11. Profilé d'étanchéité (1), destiné en particulier à assurer l'étanchéité d'une portière de véhicule par rapport à une baie d'une carrosserie, comprenant une portion de serrage (2 ; 2') et au moins une portion d'étanchéité (3),
la portion de serrage (2 ; 2') et ladite au moins une portion d'étanchéité (3) comprenant chacune un ou plusieurs caoutchoucs vulcanisés,
**caractérisé en ce que** la portion de serrage (2) comprend plusieurs profilés de serrage (5a ; 5b) distincts.
